(19) Europäisches Patentamt
European Patent Office
Office européen des brevets

(11) **EP 4 254 879 A1**

(12) **DEMANDE DE BREVET EUROPEEN**

(43) Date de publication:
04.10.2023 Bulletin 2023/40

(21) Numéro de dépôt: 23161528.7

(22) Date de dépôt: **13.03.2023**

(51) Classification Internationale des Brevets (IPC):
*H04L 12/28* (2006.01)     *H04L 67/12* (2022.01)

(52) Classification Coopérative des Brevets (CPC):
**H04L 12/2807; H04L 67/12**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **31.03.2022 FR 2202958**

(71) Demandeur: **Orange**
**92130 Issy-les-Moulineaux (FR)**

(72) Inventeurs:
• **CUMIN, Julien**
**92326 CHATILLON (FR)**
• **RAMPARANY, Fano**
**92326 CHATILLON (FR)**
• **BOUR, Frédéric**
**92326 CHATILLON (FR)**

(74) Mandataire: **Cabinet Beau de Loménie**
**158, rue de l'Université**
**75340 Paris Cedex 07 (FR)**

(54) **PROCEDE ET DISPOSITIF DE TRANSMISSION D'INFORMATION DE CONFIGURATION D'UN ENVIRONNEMENT**

(57)     L'invention concerne un procédé et un dispositif de transmission d'information de configuration d'un environnement comprenant au moins un premier objet connecté et mettant en oeuvre au moins un premier service accessibles à travers une première interface de communication. Selon l'invention, le procédé est mis en oeuvre par un ordinateur et comprend :
- la détermination d'un fonctionnement d'au moins un second objet connecté ou de la mise en oeuvre d'au moins un second service accessibles à travers au moins une deuxième interface de communication différente de la première interface de communication,
- la transmission à la première interface de communication d'information de configuration dudit environnement accessible par la première interface de communication en fonction du fonctionnement dudit au moins second objet connecté ou de la mise en oeuvre dudit au moins second service.

[Fig. 1]

**(Cont. page suivante)**

EP 4 254 879 A1

[FIG. 4]

| | |
|---|---|
| Détermination de profils utilisateurs | E1 |
| Enregistrement des profils dans la base de données | E2 |
| Sélection d'un utilisateur | E3 |
| Sélection d'un ensemble de profils utilisateurs | E4 |
| Vectorisation des profils | E5 |
| Regroupement des profils sélectionnés | E6 |
| Calcul d'une distance entre profils | E7 |
| Sélection d'un ou plusieurs groupes | E8 |
| Analyse des services, des objets connectés, des configurations | E9 |
| Comparaison avec le profil de l'utilisateur sélectionné | E10 |
| Evaluation des coûts de changement | E11 |
| Classification | E12 |
| Transmission des recommandations | E13 |
| Prise en compte de l'avis de l'utilisateur | E14 |

## Description

Domaine Technique

La présente invention concerne le domaine de la configuration d'objets connectés dans un environnement utilisateur, en particulier mais non limitativement, dans un environnement intelligent tel que la maison connectée.

Technique antérieure

Aujourd'hui, les opérateurs de services fournissent et déploient de nombreux services à leurs abonnés. Outre les services, les opérateurs proposent également de nombreux objets connectés aptes ou non à mettre en oeuvre ces services ou certains de ces services. De plus ces objets connectés peuvent être configurés de différentes manières, en modifiant certains de leurs paramètres de configuration, pour faire fonctionner tel ou tel service. Il est d'ailleurs à noter que certains services peuvent exister sans objets connectés, certains objets connectés peuvent fonctionner sans la souscription à un service et certaines configurations peuvent faire fonctionner un objet avec aucun, un ou plusieurs services. Ainsi, il devient complexe, à la fois pour l'utilisateur et pour l'opérateur de savoir si l'utilisateur utilise les services, les objets connectés et les configurations des objets connectés qui lui conviennent le mieux. Il est donc possible qu'un utilisateur, selon son profil, ne profite pas pleinement de son abonnement et pourrait prétendre à l'utilisation de services supplémentaires, à l'utilisation d'objets connectés complémentaires ou simplement à utiliser différemment les objets connectés dont il dispose en modifiant leur configuration.

Il existe donc un besoin pour améliorer l'environnement d'un utilisateur en terme d'objets connectés et de services et pour améliorer la configuration de ces services et objets connectés. Autrement dit, il existe un besoin d'exploiter efficacement un système technique comportant un ou plusieurs objets connectés.

Exposé de l'invention

La présente divulgation propose un procédé de transmission d'information de configuration d'un environnement comprenant au moins un premier objet connecté et mettant en oeuvre au moins un premier service accessible à travers une interface de communication, ledit procédé étant mis en oeuvre par un ordinateur et comprenant :

- la détermination d'un fonctionnement d'au moins un second objet connecté ou de la mise en oeuvre d'au moins un second service accessibles à travers au moins une deuxième interface de communication différente de la première interface de communication,

- la transmission à ladite première interface de communication d'information de configuration dudit environnement accessible par ladite première interface de communication en fonction du fonctionnement dudit au moins second objet connecté ou de la mise en oeuvre dudit au moins second service.

Ainsi, de manière avantageuse, un utilisateur connecté à la première passerelle peut se voir proposer une nouvelle configuration de son environnement en fonction du fonctionnement d'un autre objet connecté associé à une autre interface de communication ou en fonction de la mise en oeuvre d'un service associé à une autre interface de communication. Par le fonctionnement d'un objet connecté ou la mise en oeuvre d'un service, on entend ici l'utilisation d'un objet, ou d'un service et non pas la simple détention. Utiliser une information relative au fonctionnement ou à la mise en oeuvre permet avantageusement de ne pas prendre en compte uniquement la détention d'un objet connecté mais également le fait que cet objet connecté soit effectivement utilisé ou que le service soit utilisé. Ceci peut rendre plus pertinente l'information de configuration transmise. Ainsi, l'invention peut permettre d'exploiter efficacement un système technique comportant un ou plusieurs objets connecté. Le contenu des informations de configuration concerne donc l'état d'un système technique permettant d'exploiter correctement ce système ou environnement technique. L'information de configuration transmise peut ainsi permettre de configurer un objet connecté de manière différente et plus particulièrement dans un mode de fonctionnement qui serait plus adapté à l'utilisateur, de même pour un service.

Par la détermination du fonctionnement d'un objet, on entend le fait de déterminer que cet objet est utilisé, autrement dit la détermination de l'utilisation d'un objet. Ceci s'oppose à la détermination de la détention d'un objet.

Selon un mode de réalisation préféré, la détermination du fonctionnement d'un second objet connecté prend en compte une durée de fonctionnement ou une fréquence d'utilisation de l'objet connecté.

Ainsi, un objet fréquemment utilisé est avantageusement pris en compte pour déterminer le fonctionnement d'un second objet connecté et plus qu'un objet moins utilisé. Plutôt que la durée d'utilisation, il est également pertinent de prendre en considération la fréquence d'utilisation. En effet, certains objets peuvent servir souvent mais peu longtemps, et l'inverse pour d'autres. La durée de fonctionnement et la fréquence d'utilisation sont des caractéristiques qui peuvent avantageusement représenter le fonctionnement/l'utilisation d'un objet connecté ou d'un service.

Selon un mode de réalisation préféré, le au moins un premier et le au moins un second objets connectés sont associés à au moins une configuration, la détermination du fonctionnement d'un second objet connecté prend en compte une durée de fonctionnement ou une fréquence d'utilisation de l'objet associé à au moins une des configurations.

Les objets connectés, en tant qu'objets intelligents, peuvent avantageusement être configurés pour différents usages et ainsi fonctionner avec différents services ou en autonomie. Il est donc particulièrement avantageux que, non seulement l'utilisation d'un objet connecté soit prise en compte, mais également son utilisation dans les différentes configurations.

Préférentiellement le au moins un premier et le au moins un second objets connectés configurés dans l'une au moins desdites configurations sont accessibles par la souscription à au moins un service, ou dans lequel au moins un service peut être souscrit par l'intermédiaire respectivement des première ou deuxième interfaces de communication d'accès, la détermination du fonctionnement d'un second objet connecté prenant en compte une durée de fonctionnement ou une fréquence d'utilisation associée aux services souscrits.

En prenant en compte les services souscrits, les utilisateurs des interfaces de communication d'accès peuvent également se voir proposer des configurations plus adaptées à leur profil.

Préférentiellement, le procédé comprend la détermination d'un profil associé à la première passerelle et la détermination d'un profil associé à la au moins une seconde passerelle, la détermination du profil prenant en compte :

- les objets connectés qui sont connectés à la passerelle,
- la configuration des objets connectés,
- les services souscrits,
- une durée de fonctionnement ou une fréquence d'utilisation associée aux services souscrits et/ou une durée de fonctionnement ou une fréquence d'utilisation des objets connectés associée à au moins une des configurations des objets.

Préférentiellement, le procédé comprend la détermination d'un profil associé à la première interface de communication et la détermination d'un profil associé à la au moins une seconde interface de communication, la détermination du profil prenant en compte :

- les objets connectés qui sont connectés à l'interface de communication,
- la configuration des objets connectés,
- les services souscrits,
- une durée de fonctionnement ou une fréquence d'utilisation associée aux services souscrits et/ou une durée de fonctionnement ou une fréquence d'utilisation des objets connectés associée à au moins une des configurations des objets.

Selon un mode de réalisation préféré, le procédé comprend

- le regroupement, en plusieurs groupes, des profils associés aux secondes interfaces de communication, le regroupement étant basé sur une similarité entre les profils,
- l'obtention d'une distance entre le profil associé à ladite première passerelle et un profil représentatif du au moins un groupement,
- l'information de configuration prenant en compte le profil représentatif du au moins un groupement en fonction de la distance.

Selon un mode de réalisation préféré, le procédé comprend, en outre, la sélection d'un ou plusieurs groupements de profils, la sélection consistant à sélectionner le ou les profils dont la distance avec le profil de la première passerelle est la plus faible, l'information de modification prenant en compte le profil des interfaces de communication d'au moins les groupements sélectionnés.

Selon un mode de réalisation préféré, le procédé comprend, en outre une classification pour les groupements de profils sélectionnés, des objets connectés en fonctionnement, des services souscrits, de la configuration utilisée pour l'objet connecté en fonctionnement, les objets connectés étant associés à un type d'objet connecté, ladite classification étant basée sur l'un ou l'autre ou plusieurs parmi :

- le nombre d'interfaces de communication connectées chacune à un des types d'objets connectés ou le nombre d'interfaces de communication pour lesquelles un au moins des services est souscrit,
- la durée de fonctionnement ou la fréquence d'utilisation du service ou du type d'objet connecté dans une desdites configurations,

la classification ne comprenant pas les types d'objets connectés utilisés dans les configurations en fonctionnement accessibles par la première interface de communication, ni lesdits services souscrits accessibles par la première interface de communication.

Selon un mode de réalisation préféré, le procédé comprend pour au moins un nombre déterminé de services souscrits, et/ou de types d'objets connectés présents dans la classification, la détermination d'un coût associé à la mise en oeuvre des services ou des types d'objets connecté dans les configurations.

Selon un mode de réalisation préféré, l'information de configuration comprend une liste de services, et/ou de types d'objets connectés et de configurations associées sélectionnés en fonction du coût déterminé. La présente divulgation concerne également un dispositif de transmission d'information de configuration d'au moins un objet connecté accessible à travers une première interface de communication, le dispositif comprenant un ou plusieurs processeurs configurés pour :

- déterminer un fonctionnement d'au moins un autre objet connecté accessible à travers au moins une deuxième passerelle d'accès différente de la première passerelle d'accès,

- transmettre, à la première passerelle d'accès, une information de configuration d'au moins un objet connecté accessible par la première passerelle d'accès en fonction du fonctionnement.

Selon un autre aspect, la présente divulgation concerne également un programme d'ordinateur comprenant des instructions pour l'exécution des étapes du procédé selon la présente divulgation lorsque le programme est exécuté par un ordinateur.

Selon encore un autre aspect, la présente divulgation concerne un support d'enregistrement lisible par un ordinateur sur lequel est enregistré un programme d'ordinateur comprenant des instructions pour l'exécution des étapes du procédé de transmission selon la présente divulgation.

Selon encore un autre aspect, la présente invention concerne un procédé de recommandation de modification d'un environnement d'un premier utilisateur, ledit environnement comprenant au moins un premier objet connecté accessible à travers une première passerelle d'accès, ledit procédé étant mis en oeuvre par un ordinateur et comprenant :

- la détermination d'un fonctionnement d'au moins un second objet connecté accessible à travers au moins une deuxième passerelle d'accès différente de la première passerelle d'accès,
- la recommandation à ladite première passerelle d'accès de modifier la configuration dudit environnement accessible par ladite première passerelle en fonction dudit fonctionnement.

Selon encore un autre aspect, la présente invention concerne un dispositif de transmission d'information de configuration d'un environnement comprenant au moins un premier objet connecté et mettant en oeuvre au moins un premier service accessible à travers une première interface de communication, ledit dispositif comprenant un ou plusieurs processeurs configurés pour :

- déterminer un fonctionnement d'au moins un autre objet connecté ou la mise en oeuvre d'au moins un second service accessibles à travers au moins une deuxième interface de communication différente de la première interface de communication,
- transmettre, à ladite première interface de communication, une information de configuration dudit environnement accessible par ladite première interface de communication en fonction dudit fonctionnement dudit au moins second objet connecté ou la mise en oeuvre dudit au moins second service.

La présente invention concerne également un dispositif de transmission d'information de configuration d'un environnement comprenant au moins un premier objet connecté et mettant en oeuvre au moins un premier service accessible à travers une première interface de communication, ledit dispositif comprenant un ou plusieurs processeurs configurés pour :

- déterminer un fonctionnement d'au moins un autre objet connecté ou la mise en oeuvre d'au moins un second service accessibles à travers au moins une deuxième interface de communication différente de la première interface de communication,
- transmettre, à ladite première interface de communication, une information de configuration dudit environnement accessible par ladite première interface de communication en fonction dudit fonctionnement dudit au moins second objet connecté ou de la mise en oeuvre dudit au moins second service.

La présente invention concerne également une passerelle d'accès permettant de connecter un premier système à un opérateur de services, le premier système comprenant au moins un premier objet connecté (COx-i) et mettant en oeuvre au moins un premier service, ledit opérateur de services étant connecté à au moins un second système à travers une seconde passerelle d'accès, ledit second système comprenant au moins un second objet connecté et mettant en oeuvre au moins un second service, ladite passerelle d'accès étant configurée pour recevoir, dudit opérateur de services, au moins une information de configuration dudit premier système, ladite information de configuration étant déterminée en fonction du fonctionnement dudit au moins second objet connecté ou de la mise en oeuvre dudit au moins second service dans ledit second système.

La présente invention concerne également un objet connecté dans un système comprenant un ou plusieurs objets connectés, une passerelle d'accès et mettant en oeuvre au moins un premier service, ledit système étant connecté à un opérateur de services à travers ladite première passerelle d'accès, ledit opérateur de services étant connecté à au moins un second système à travers une seconde passerelle d'accès, ledit second système comprenant au moins un second objet connecté et mettant en oeuvre au moins un second service, ledit objet connecté est configuré pour recevoir, dudit opérateur de services, à travers ladite première passerelle d'accès, au moins une information de configuration, ladite information de configuration étant déterminée en fonction du fonctionnement dudit au moins second objet connecté ou de la mise en oeuvre dudit au moins second service dans ledit second système.

Brève description des dessins

D'autres caractéristiques et avantages de la présente invention ressortiront de la description faite ci-dessous, en référence aux dessins annexes qui en illustrent un exemple de réalisation dépourvu de tout caractère limitatif.

[Fig. 1] La figure 1 représente un système selon un mode de réalisation préféré de l'invention.

[Fig. 2] La figure 2 représente un dispositif selon un mode de réalisation préféré de l'invention.

[Fig. 3] La figure 3 représente un environnement utilisateur selon un mode de réalisation préféré de l'invention.

[Fig. 4] La figure 4 représente un diagramme d'un procédé selon un mode de réalisation préféré de l'invention.

[Fig. 5] La figure 5 représente un exemple de listes associées à des groupes sélectionnés.

[Fig. 6] La figure 6 représente un exemple de liste, à gauche, établie à partir des listes de la figure 5 et un exemple de liste, à droite, comprenant la liste des services souscrits et objets connectés en fonctionnement dans l'environnement d'un utilisateur cible.

[Fig. 7] La figure 7 représente un exemple d'une liste ordonnée en fonction d'un coût induit.

Description des modes de réalisation

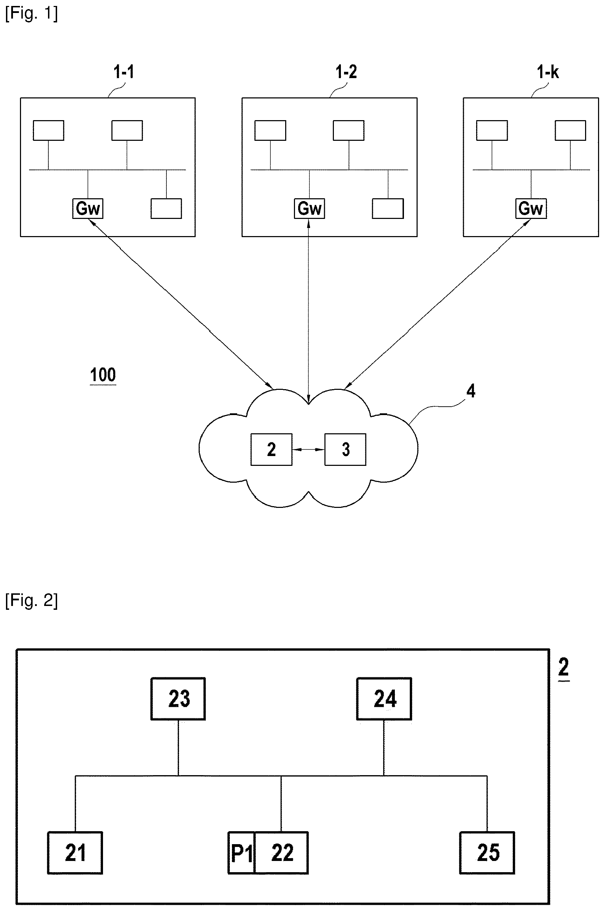

**La figure 1** représente un système comprenant un ensemble d'environnements 1-i de k utilisateurs, notés 1-1 à 1-k ainsi qu'un dispositif de type serveur 2 et une base de données 3.

Un environnement au sens de la présente divulgation est constitué d'un ensemble de dispositifs ou objets connectés pouvant être configurés ou paramétrés et pouvant fonctionner avec ou en collaboration avec un ou plusieurs services souscrits auprès d'un ou plusieurs opérateurs, par un utilisateur de cet environnement. L'environnement est généralement accessible par un opérateur à travers une passerelle d'accès.

Un service est un accès à des applications généralement logicielles, fournies par un opérateur. Parmi des exemples de service, on peut notamment citer des applications de type voix sur IP (IP signifiant protocole internet), de type contrôle domotique lorsque ces services sont associés à des objets connectés, par exemple, contrôle de température, vidéo surveillance, ouverture et fermeture des fenêtres, ou encore services à la personne, de type médicalisé par exemple ou aide aux personnes âgées.

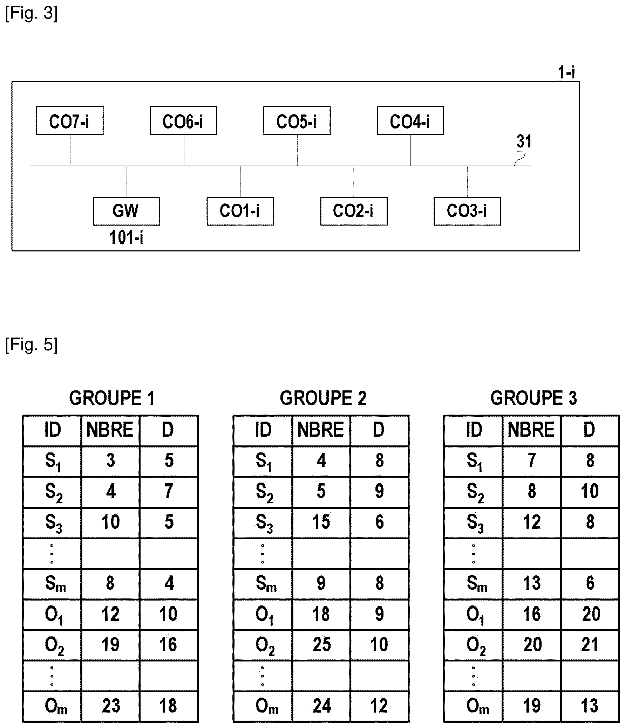

Chaque environnement 1-1 à 1-k est de manière préférée un environnement de type maison connectée mais il est à noter que d'autres types d'environnements peuvent être considérés et de manière non limitative des environnements de type bureau, hôpital, scolaire, professionnel ou tout autres. Plus généralement, les environnements 1-i sont des environnements intelligents dans le sens où ils comprennent des dispositifs communicants tels des objets connectés et peuvent mettre en oeuvre des services fournis par un ou plusieurs opérateurs de services, de type internet par exemple. La figure 3 décrit de manière détaillée de tels environnements. Un tel environnement est un environnement technique dans le sens où il comprend des moyens techniques tels des objets connectés et des services véhiculés par des protocoles de communication technique. De plus ces équipements sont des équipements intelligents et donc dotés de moyens logiciels et/ou matériels leur permettant de dialoguer entre eux et vers des dispositifs extérieurs à l'environnement.

Le serveur 2 représente un fournisseur de services ou opérateur téléphonique apte à délivrer aux environnements 1-i la connexion à un réseau de communication et des dispositifs pouvant communiquer entre eux par le biais de ces réseaux de communication. Il est représenté ici par un serveur dans un nuage informatique mais ceci est donné à titre illustratif et il est bien sûr entendu qu'un tel fournisseur de services comprend une infrastructure comprenant une pluralité de serveurs et de dispositifs informatiques reliés entre eux et capables de délivrer le service auxdits environnements 1-i et auxdits utilisateurs de ces environnements. Un tel service est en général réservé à des utilisateurs ayant souscrit un abonnement auprès d'un fournisseur de services, encore appelés abonnés ou utilisateurs indifféremment dans la suite de la description. Les abonnés peuvent souscrire à différents services, tels des services de téléphonie, de données mais également des services plus particuliers tels des services de télésurveillance, des services de contrôle de chauffage, des services de surveillance de personnes âgées, des services relatifs à la maison connectée de manière générale. De tels services peuvent être liés à la présence d'objets connectés mais ce n'est pas toujours nécessaire, de tels services peuvent également uniquement fonctionner sur des téléphones ou ordinateurs (qui peuvent être également par ailleurs être considérés comme des objets connectés). Parmi de tels objets connectés nous pouvons citer de manière non limitative, des capteurs d'ouverture de fenêtre, des ampoules connectées, des téléviseurs, des détecteurs de présence, des capteurs de température, des radiateurs connectés.

La base de données 3 comprend des données relatives aux utilisateurs du système 100. En effet, le fournisseur de services 4 dispose à la fois d'informations personnelles sur les abonnés de son service mais aussi d'informations relatives à son ou ses abonnements, ou souscriptions, achats ou locations d'objets connectés.

Le fournisseur de services 4 peut être en mesure de connaitre à tout instant quels sont les services utilisés par chacun de ses abonnés, de quels objets connectés dispose chaque utilisateur, comment est configuré chacun de ces objets connectés. Ceci par exemple par la surveillance du trafic sur le réseau du fournisseur de services. Selon la présente divulgation, le fournisseur de services peut comparer non seulement quels sont les services, objets connectés et configurations des objets d'autres utilisateurs pour proposer de nouveaux services, objets connectés ou modification de configuration à chacun ou à un utilisateur. Il peut étudier en outre l'utilisation ou le fonctionnement de ces services et des objets et les configurations des objets lors de l'utilisation des services et des objets. En outre, le fournisseur de services peut analyser l'utilisation ou fonctionnement des services ou des objets ou la configuration des objets lors de l'utilisation des services et des objets dans le temps de manière à faire des recommandations à l'utilisateur d'une manière très pertinente. De plus, les services, les objets connectés et les configurations pouvant être liés, dans le sens où ils peuvent fonctionner ensemble, le fournisseur de services ne propose pas de manière systématique l'achat ou la location d'un nouveau service, d'un nouvel objet connecté. Il peut avantageusement se baser sur la relation qui peut exister entre service, objet connecté et configuration pour proposer à l'utilisateur, via sa passerelle d'accès, une ou plusieurs modifications, voire remplacement d'un objet connecté par un autre objet connecté plus pertinent. Ces modifications peuvent être associées à une vente ou une location, donc monétisées mais pas uniquement puisqu'elles peuvent également conduire à une modification non payante de la configuration d'un ou plusieurs objets connectés pour optimiser ou améliorer ou modifier le fonctionnement d'un service auquel l'utilisateur a déjà souscrit. Dans un tel cas, il peut s'agir de modifications techniques, telles des paramétrages techniques ou des modifications de connexion physiques. Ces modifications peuvent également comprendre le remplacement d'un objet connecté par un autre objet connecté.

Le terme configuration tel que compris dans la présente divulgation peut s'entendre par le paramétrage d'un objet connecté lorsqu'il est associé à un objet connecté ou d'un service lorsqu'il est associé à un service ou les deux. Un paramètre peut par exemple permettre à un objet connecté de mettre en oeuvre un service plutôt qu'un autre. La modification d'un tel paramètre pour un objet connecté peut engendrer également la modification d'un paramètre de configuration d'un service pour prendre en compte cette modification de configuration de l'objet connecté.

Par exemple, une configuration d'un radiateur connecté peut permettre la désactivation du chauffage en cas de détection d'une fenêtre ouverte, une anticipation de modification de la température délivrée en fonction des prévisions météorologiques, la mise en oeuvre d'un profil de chauffage dans la journée....Ainsi, le service associé au contrôle de la température/du chauffage à distance subira également une modification de configuration pour prendre en compte le capteur de détection d'ouverture de fenêtre dans le contrôle du chauffage et arrêter par exemple le chauffage dans une pièce lorsque la fenêtre est ouverte.

Plus généralement, le terme configuration peut être entendu comme un paramétrage, un paramétrage de configuration, un paramétrage de modification du fonctionnement.

Par objet connecté, on entend dans la présente divulgation, tout objet qui est capable, outre sa fonction principale, d'envoyer ou de recevoir des informations par l'intermédiaire d'un réseau de télécommunication. Ainsi, un ordinateur, un téléphone mobile, peuvent être considérés comme un objet connecté au sens de la présente divulgation.

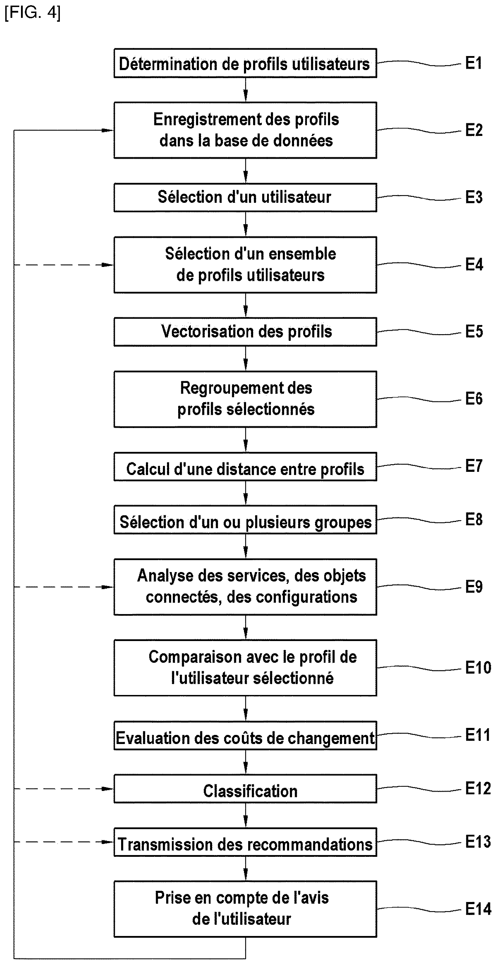

Pour recommander l'utilisation ou la mise en fonctionnement de nouveaux services, objets connectés ou plus généralement de modifications de l'environnement, le fournisseur de services peut analyser l'ensemble des données liées aux utilisateurs enregistrés dans la base de données pour obtenir un profil des utilisateurs. Plus précisément, le procédé comprend la détermination du profil associé à une passerelle d'accès à laquelle les utilisateurs sont rattachés. La figure 4 décrit plus en détail la détermination de tels profils. Les recommandations faites par le fournisseur de services à un utilisateur de l'environnement 1-i et transmises sous la forme d'une information de configuration sont préférentiellement basées sur le profil lié à un ou plusieurs utilisateurs.

Le profil comprend des informations sur la détention des objets connectés et leur configuration ainsi que sur la souscription de services et leur configuration.

Outre les informations sur la détention et la souscription, le profil prend en compte des informations sur l'utilisation ou le fonctionnement des objets connectés, des services et des configurations associées.

Prendre en compte l'utilisation ou le fonctionnement permet d'obtenir un profil plus représentatif et ainsi de proposer des recommandations plus pertinentes. En effet, le fournisseur de services a accès aux données relatives aux usages de l'utilisateur et possède ainsi l'information non seulement de la détention des objets connectés et de la souscription aux services mais aussi de l'utilisation qui en est faite. Cet accès se fait au travers des informations passant par la passerelle d'accès. En effet, que ce soient par les services ou par les objets connectés, le réseau de communication est utilisé pour faire transiter des informations échangées et ainsi le fournisseur de services peut connaitre quels services et quels objets connectés sont réellement utilisés ou en fonctionnement, à quelle fréquence ou pendant quelle durée. Le fournisseur de services peut donc connaitre quelles sont les configurations de chaque objet connecté et s'il est utilisé ou fonctionne de manière pertinente par rapport aux services auxquels l'utilisateur a souscrit.

Par exemple, si l'environnement 1-i de l'utilisateur i comprend un radiateur connecté, et que l'utilisateur i a souscrit à un service de contrôle de température à distance, alors si une majorité des utilisateurs de la base de données ayant souscrit à un service de contrôle de température à distance utilise un radiateur connecté, une recommandation faite à l'utilisateur i pourra être de prendre en compte dans sa configuration, le radiateur connecté en le connectant au service.

La présente divulgation concerne aussi un procédé de recommandation de modification d'un environnement d'un premier utilisateur, ledit environnement comprenant au moins un premier objet connecté (COx-i) et mettant en oeuvre au moins un premier service accessibles à travers une interface de communication (101-i), ledit procédé étant mis en oeuvre par un ordinateur et comprenant :

- la détermination d'un fonctionnement d'au moins un second objet connecté ou la mise en oeuvre d'au moins un second service accessibles à travers au moins une deuxième interface de communication différente de la première interface de communication,
- la recommandation à ladite première interface de communication (101-i) de modifier la configuration dudit environnement accessible par ladite première interface de communication (101-i) en fonction dudit fonctionnement.

Selon une première variante, la recommandation peut avantageusement comprendre ou consister en la transmission d'au moins une information de configuration dudit premier objet connecté.

Selon une seconde variante, la recommandation peut également comprendre la transmission d'une liste de plusieurs modifications de configuration dudit premier objet connecté.

Selon une troisième variante, lorsque ledit environnement comprend également un ou plusieurs services souscrits par ledit utilisateur, la recommandation peut également comprendre ou consister en la transmission d'au moins une information de configuration dudit au moins un service.

Selon une quatrième variante, la recommandation comprend la proposition de remplacement ou d'achat d'un ou plusieurs objets connectés, ou la proposition de souscription ou de désabonnement d'un ou plusieurs services.

Selon un mode de réalisation, le fonctionnement prend en compte ou comprend une durée de fonctionnement ou une fréquence d'utilisation des objets connectés et/ou des services. Cette prise en compte peut consister à donner une pondération plus importante à un objet connecté et/ ou à un services accessible par plusieurs autres passerelles d'accès ou plus fréquemment utilisé par plusieurs autres passerelles d'accès.

Selon une variante, lorsque ledit objet connecté ou ledite service sont est configurés selon une configuration donnée, ledit fonctionnement prend en compte une durée de fonctionnement ou une fréquence d'utilisation associée à au moins la configuration donnée.

Selon encore une autre variante, lorsque ledit au moins un premier et second objets connectés configurés dans l'une au moins desdites configurations sont accessibles par la souscription à au moins un service, ledit fonctionnement prend en compte une durée de fonctionnement ou une fréquence d'utilisation associée audits services souscrits. Cette prise en compte peut consister à donner une pondération plus importante à un service souscrit par un grand nombre d'interfaces de communication ou plus fréquemment utilisés.

Outre l'utilisation ou le fonctionnement, le fournisseur de services peut donc prendre avantageusement en compte l'utilisation ou le fonctionnement dans le temps et/ou la fréquence d'utilisation ou de fonctionnement du service, des objets connectés et de leur configuration. Ainsi, même si un utilisateur achète ou loue un objet connecté, mais qu'il ne l'utilise jamais ou très rarement, alors celui-ci ne figurera pas parmi les recommandations faites à un autre utilisateur. Il n'est pas rare qu'un utilisateur achète un objet connecté et se rende compte plus tard qu'il ne s'en sert pas, de même pour un service souscrit.

Les environnements 1-i sont reliés au serveur 2 par le biais d'un ou plusieurs réseaux. Ces réseaux sont des réseaux de type internet par exemple ou des réseaux de type cellulaire. Par exemple, cet environnement est celui d'un opérateur de services fournissant des services internet de type données et/ou téléphoniques.

**La figure 2** représente, de manière schématique, un mode de réalisation préféré d'un serveur 2 apte à mettre en oeuvre un procédé selon un mode de réalisation de la présente divulgation, typiquement le procédé décrit en figure 4.

Le serveur 2 comprend un ou plusieurs processeurs 21 mettant en oeuvre un procédé selon la présente divulgation, une mémoire morte 22 (de type « ROM »), une mémoire non volatile réinscriptible 23 (de type « EEPROM » ou « Flash NAND » par exemple), une mémoire volatile réinscriptible 24 (de type « RAM ») une interface de communication 25 avec la base de données 3 et avec les environnements 1-i. La mémoire morte 22 constitue un support d'enregistrement conforme à un exemple de mode de réalisation de l'invention, lisible par le processeur ou les processeurs 21 et sur lequel est enregistré un programme d'ordinateur P1 conforme à un exemple de mode de réalisation de l'invention. En variante, le programme d'ordinateur P1 est stocké dans la mémoire non volatile réinscriptible 23.

Le programme d'ordinateur P1 peut permettre au serveur 2 de mettre en oeuvre au moins une partie du procédé conforme à la présente divulgation.

Ce programme d'ordinateur P1 peut ainsi définir des modules fonctionnels et logiciels, configurés pour mettre en oeuvre les étapes d'un procédé de de transmission d'information conforme à un exemple de mode de réalisation de l'invention, ou au moins une partie de ces étapes. Ces modules fonctionnels s'appuient sur ou commandent les éléments matériels 21, 22, 23, 24, 25 du serveur 2 cités précédemment.

**La figure 3** représente un environnement utilisateur 1-i.

Un tel environnement utilisateur est constitué d'un ensemble d'objets connectés communiquant entre eux via un réseau 31 et un point d'accès à un deuxième réseau. L'environnement 1-i comprend un ou plusieurs objets connectés indiquées Cox-i communiquant entre eux par un réseau 31. Selon un mode de réalisation illustré ici mais non limitatif, l'environnement 1-i comprend notamment un capteur d'ouverture de fenêtre CO1-i, une télévision connecté CO2-i, un détecteur de présence CO3-i, une ampoule connectée CO4-i, une caméra connectée CO5-i, un capteur de température CO6-i, un radiateur connecté CO7-i, et éventuellement d'autres objets connectés COx-i. Par type d'objet connecté, au cours de la présente divulgation, on entend la nature de l'objet connecté, à savoir un radiateur connecté correspond à un premier type et un détecteur de présence correspond à un second type.

De manière générale, les objets connectés sont par exemple des objets domestiques comme des ampoules, des lampes, des radiateurs ou encore des appareils audio, vidéo, des compteurs d'électricité, des systèmes d'arrosage, etc. Les objets connectés dialoguent entre eux via le réseau 31 qui peut non limitativement faire partie de plusieurs catégories de réseaux :

- Les réseaux de télécommunication filaires, appartenant aux opérateurs traditionnels qui proposent des technologies de connexion haut débit et longue distance, appelés dans la suite WAN (Wide Area Network) ;

- Les réseaux radio sans fil, divisés eux-mêmes en différentes catégories :

    ◦ Les technologies de longue portée à haut débit, de type protocoles mobiles (2G, 3G, 4G,etc), appartenant aux opérateurs de télécommunication, longue distance, ou encore à bas débit comme par exemple LoRa (de l(anglais Long Range Wide-area), ou Sigfox (un réseau cellulaire à bas débit) ;

    ◦ Les technologies de moyenne portée de type Z-Wave, Wi-Fi, etc,

    ◦ Les technologies de courte portée de type NFC (Near Field Communication), bluetooth, BLE, Zigbee, etc.

- En plus de ces protocoles radio, certains réseaux lumineux (Li-Fi) voire sonores, équivalents à des protocoles non filaires, peuvent également être utilisés.

Outre l'interface de communication 101-i et les objets connectés Cox-i, l'environnement de l'utilisateur peut comprendre d'autres dispositifs, connectés ou non d'ailleurs.

Les objets connectés Cox-i sont, au moins pour certains d'entre eux configurables. Si nous considérons le capteur de température CO6-i, il peut par exemple être configuré pour fonctionner en lien avec le capteur d'ouverture de fenêtre CO1_i mais il peut également ne pas être connecté à ce capteur. Il peut également être connecté pour fonctionner avec le radiateur connecté CO7-i et envoyer par exemple un signal qui permettra de mettre en chauffe ou d'arrêter le radiateur connecté CO7-i.

De même, l'ampoule connectée CO4-i peut être configurée pour fonctionner ou non avec le détecteur de présence. Lorsque le détecteur de présence ne détecte aucune présence dans une pièce, l'ampoule connectée présente dans cette pièce peut être configurée pour être éteinte. Ceci peut par exemple être associé à une temporisation.

De même la télévision connectée CO2-i peut être également configurée pour être reliée par exemple au détecteur de présence CO3-i pour être éteinte lorsque le détecteur de présence ne détecte aucune présence devant le téléviseur ou dans la pièce où se trouve ce téléviseur connecté CO2-i. Le volume de la télévision connectée peut également être baissé si un utilisateur reçoit un appel téléphonique et qu'il se trouve dans la pièce où se trouve la télévision connectée, si le téléphone est également connecté, par exemple l'un des dispositifs COx-i.

Outre les objets connectés, l'environnement 1-i comprend une interface de communication 101-i entre les différents éléments de l'environnement et le serveur distant.

Cette interface de communication 101-i est de préférence mais non limitativement, une passerelle d'accès de type ADSL, VDSL, fibre permettant l'interconnexion de l'environnement utilisateur 1-i à l'opérateur de services 4. Chaque utilisateur peut en outre avoir souscrit à différents services comme indiqué précédemment et notamment en référence à la figure 1. En effet, l'interface de communication 101-i est par exemple un dispositif de type passerelle d'accès et en général fournie par un opérateur de service. Un tel opérateur fournit en général la passerelle d'accès et un certain nombre de services auxquels l'utilisateur peut souscrire, moyennant en général un abonnement, souvent mensuel. Ainsi, outre les objets connectés, l'environnement 1-i comprend un ou plusieurs services, qui peuvent être utilisés dans une ou plusieurs configurations données.

Parmi les services proposés, il est envisagé par exemple mais non limitativement, des services de vidéo à la demande (VOD), des services de télésurveillance, des services d'ouverture/fermeture de volets, des services d'éclairage, des services de contrôle de consommation énergétique, des services météo pour accéder au contrôle de température intérieure, d'analyse du taux d'humidité, de la qualité de l'air.

Certains de ces services peuvent être mis en oeuvre uniquement à la condition d'être associés à un ou plusieurs objets connectés. Certains services peuvent être mis en oeuvre avec un ou plusieurs de ces objets connectés. Ainsi par exemple, si un utilisateur souscrit à un service de contrôle du chauffage à son domicile, comme l'utilisateur de l'environnement 1-i, il peut disposer d'un ou plusieurs radiateurs connectés CO7-i, il peut également disposer de capteurs de température CO6-i, de capteurs d'ouverture de fenêtres CO1-i. Il peut également ne pas bénéficier de tous ces équipements mais d'une partie seulement, ce qui lui permet malgré tout de souscrire au service de contrôle de chauffage. Par exemple, comme l'utilisateur de l'environnement 1-i, il peut ne pas disposer de capteurs d'ouverture de portes et ainsi, le service ne sera pas optimal mais fonctionnera partiellement.

Ainsi, l'utilisateur peut se voir proposer, une nouvelle configuration de son environnement, par l'achat ou la location de dispositifs complémentaires pour améliorer son service de contrôle de chauffage en fonction du profil associé à une ou plusieurs autres passerelles d'accès connectées à d'autres utilisateurs. L'utilisateur peut se voir proposer dans l'exemple ci-dessus l'achat ou la location d'un ou plusieurs capteurs d'ouverture de portes pour améliorer la fonctionnalité du service de contrôle de chauffage.

Si l'utilisateur d'un environnement 1-i tel que représenté en figure 3 n'a pas souscrit au service de contrôle de chauffage, alors selon la présente divulgation, il peut se voir proposer une modification de configuration de son environnement, et notamment ce service de contrôle de chauffage au vu des dispositifs connectés dont il dispose et en fonction de l'utilisation d'un ou plusieurs autres utilisateurs d'un service de contrôle de chauffage et utilisant les mêmes ou certains des mêmes objets connectés.

Par ailleurs, il est également possible que certains de ces appareils parmi par exemple, le capteur de température, le détecteur d'ouverture de portes, ne soit pas configuré de manière optimale ou du moins, selon le procédé divulgué ici, puissent être configurés en fonction de l'utilisation qu'en feraient d'autres utilisateurs.

La présente divulgation peut proposer dans ce cas une modification de configuration des objets connectés. Par exemple, les heures de chauffe peuvent être modifiées en fonction de profils présents dans la même zone géographique. Par zone géographique, on peut définir des zones géographiques ayant des similarités de conditions météorologiques ou uniquement de proximité en termes par exemple de coordonnées GPS. Il est également possible de prendre en compte des profils qui ont les mêmes horaires de présence à domicile, mêmes horaires d'entrée ou de sortie de domicile. Le procédé divulgue propose donc une modification de configuration de son environnement.

La **figure 4** représente un mode de réalisation préféré de mise en oeuvre du procédé selon la présente divulgation.

Selon ce procédé, lors d'une étape E1, le procédé comprend une étape de détermination d'un fonctionnement d'au moins un second objet connecté ou de la mise en oeuvre d'au moins un second service accessible à travers au moins une deuxième interface de communication, ou seconde passerelle d'accès différente de la première interface de communication ou première passerelle d'accès.

Plus spécifiquement, selon un mode de réalisation, le serveur 2 détermine un profil associé à une passerelle d'accès associée à un utilisateur ou encore associé à un environnement utilisateur. Par la suite, comme sur la figure 4 et pour des raisons de facilitation de compréhension, ce profil peut aussi être mentionné comme un profil utilisateur, même s'il est associé à une passerelle d'accès. Un profil est déterminé pour la première passerelle d'accès à laquelle une information de configuration est transmise et également pour une ou plusieurs autres passerelles d'accès appelées aussi secondes passerelle d'accès. Les utilisateurs connectés aux passerelles peuvent avoir souscrit un abonnement à un ou plusieurs services et sont donc répertoriés au niveau du serveur 2. Ce serveur 2 peut ainsi disposer de données de type personnelles liées à chaque abonné et aussi de données dites de fonctionnement ou encore d'utilisation.

Parmi les données personnelles, on peut noter l'âge, le genre, la localisation géographique, le profil familial, le métier et d'autres informations sur l'abonné ou son environnement familial.

Parmi les données de fonctionnement ou d'utilisation, on note le fonctionnement ou l'utilisation d'au moins un objet connecté. Par le fonctionnement, on entend ici l'utilisation pour un objet ou un service, la mise en oeuvre pour un service et non pas la simple détention. Les données de fonctionnement sont donc des données représentatives du fait qu'un objet ou un service est utilisé ou qu'un service est mis en oeuvre. Les données de fonctionnement peuvent prendre la forme d'une information codée, par exemple sur un bit pour indiquer qu'un service est utilisé (par exemple un « 1 ») ou qu'un service n'est pas utilisé (par exemple un « 0 »). De même pour un objet connecté.

Selon d'autres modes de réalisation, on peut noter les différents services auxquels l'abonné a souscrit et qu'il utilise et également prendre en compte les configurations associées aux objets connectés et aux services. Dans ce cas, pour chaque objet connecté un ou plusieurs bits peuvent être représentatifs chacun d'une configuration et codé comme indiqué ci-dessus.

Selon un mode de réalisation particulièrement intéressant, la durée de fonctionnement et/ou la fréquence d'utilisation d'un objet connecté est prise en compte pour la détermination du profil. La durée ou la fréquence d'utilisation d'un service souscrit peut également être prise en compte pour la détermination du profil. Certains objets connectés sont accessibles par la souscription à un ou plusieurs services. Dans ce cas pour chaque service ou chaque objet connecté, l'information de fonctionnement est codée sur plusieurs bits pour coder la durée ou la fréquence d'utilisation.

En effet, l'un des objectifs de la présente invention est d'offrir à un abonné l'utilisation qui semble la plus appropriée pour lui et ainsi, il est pertinent notamment de l'informer par exemple qu'il a souscrit à un ou plusieurs services mais qu'il ne les utilise pas. De la même manière il peut être pertinent de l'informer qu'il n'utilise pas ou n'utilise pas de la meilleure façon, tel ou tel objet connecté qu'il loue ou qu'il a acheté. Ainsi, il est non seulement pertinent de connaitre les objets connectés dont il dispose mais aussi leur fréquence d'utilisation et leur durée de fonctionnement. Le procédé selon l'invention peut par exemple comprendre l'association à chaque service ou à chaque objet connecté, d'une pondération liée à son utilisation. Dans un mode de réalisation, plus la pondération est élevée, plus longtemps le service ou l'objet connecté est utilisé ou plus fréquemment le service ou l'objet connecté est utilisé.

Ainsi, afin de savoir si un abonné utilise au mieux les services et les objets connectés dont il dispose, le procédé comprend la transmission des recommandations à l'abonné en fonction du profil associé à une ou plusieurs passerelles d'accès associées chacune à un ou plusieurs utilisateurs. A cette fin, le procédé comprend la transmission d'une information de configuration de l'environnement du premier utilisateur, soit d'au moins un objet connecté et/ou d'au moins un service à travers la passerelle d'accès, dite première passerelle d'accès, connectant l'environnement de l'utilisateur au serveur 2. Préalablement à la transmission, le procédé peut comprendre, dans un mode de réalisation, la détermination de cette information de configuration. Cette information de configuration est obtenue à partir des informations de fonctionnement obtenues précédemment.

Notamment, cette information de configuration est représentative du fonctionnement d'un ou plusieurs objets connectés ou d'un ou plusieurs services et accessibles par les secondes passerelles d'accès. Cette information de configuration est représentative des données de fonctionnement et notamment des objets et/ou services les plus utilisés accessibles par les autres passerelles d'accès obtenues à partir des profils. Ainsi par exemple, cette information de configuration peut lister par durée de fonctionnement ou fréquence d'utilisation chaque ou plusieurs parmi les objets connectés et services accessibles par les autres passerelles d'accès, recensées dans les profils. L'information de configuration peut être une liste contenant une sélection des x objets connectés ou des y services les plus fréquemment utilisés ou les plus longtemps utilisés, x et y étant déterminés par un fournisseur de services ou objets connectés et paramétrables. Ainsi, si la détermination des profils indique que un objet connecté Cox-i est utilisé par une grande majorité des secondes passerelles d'accès, alors l'information de configuration est une proposition d'achat de cet objet Cox-i.

Lors de la détermination du profil de la première passerelle d'accès, si le profil montre qu'un objet connecté COy-i n'est pas utilisé, alors l'information de configuration peut également être un échange de l'objet COy-i par l'objet Cox-i.

Dans certains modes de réalisation, il est possible de sélectionner seulement les données d'utilisation de certaines passerelles d'accès en se basant par exemple sur les données personnelles. Les données personnelles associées aux secondes passerelles d'accès sont comparées aux données personnelles associées à la première passerelle d'accès et seules les secondes passerelles d'accès dont les données personnelles sont proches des données personnelles associées à la première passerelle d'accès sont conservées pour déterminer les données de fonctionnement. Par proche on peut imaginer ne conserver que les secondes passerelles d'accès dont les données d'âge sont inférieures ou supérieures à plus ou moins 5 ans. On peut également imaginer conserver les secondes passerelles d'accès dont la composition d'un foyer familial associé est similaire en nombre d'enfants...

Préférentiellement, l'information de configuration de l'environnement consiste en une information de modification des objets connectés et/ou services présents dans l'environnement, ladite modification consistant en une suppression, un remplacement, un achat, une souscription, un paramétrage d'un ou plusieurs objets connectés et/ou services

Plus précisément, l'information de configuration peut représenter une ou plusieurs parmi

- une information de paramétrage d'un objet connecté,
- une information de modification de paramétrage d'un objet connecté
- une information de paramétrage d'un service,
- une information de modification de paramétrage d'un service,
- une proposition d'achat d'un nouvel objet connecté,
- une proposition de location d'un nouvel objet connecté,
- une proposition de remplacement d'un objet connecté par un nouvel objet connecté,
- une proposition de souscription à un nouveau service,
- une proposition d'arrêt de souscription à un service,
- une proposition de remplacement d'un service par un autre.

Ainsi, par exemple, si la détermination des profils des secondes passerelles d'accès montre qu'un objet connecté Cox-i est configuré dans la majorité des cas dans une configuration donnée, une information de paramétrage de l'objet connecté Cox-i, accessible par la première passerelle d'accès dans ladite configuration donnée sera transmise à la première passerelle d'accès.

La transmission d'une information de configuration consiste en la transmission d'un message comportant ladite information de configuration relative à l'environnement de l'utilisateur, c'est-à-dire à au moins un objet, et/ou au moins un service et/ou la configuration dudit au moins un objet et/ou dudit au moins un service.

Après que l'information de configuration soit reçue par la première passerelle d'accès, elle est présentée à un utilisateur selon un mode préféré de réalisation, par le biais d'une interface utilisateur. Selon une variante, elle peut également être mise en oeuvre automatiquement par transmission d'une commande de la passerelle d'accès vers un objet connecté lorsqu'il s'agit d'une modification de configuration d'un objet connecté.

Les étapes E2 à E12 constituent un mode de réalisation du procédé mis en oeuvre par le serveur 2. Dans un mode de réalisation, les passerelles d'accès sont organisées en groupe en fonction de leur profil. De manière générale, ces étapes peuvent permettre de déterminer les profils des autres passerelles d'accès du système et de sélectionner une partie de certaines passerelles d'accès. Ces étapes peuvent permettre plus précisément de sélectionner des profils d'interfaces de communication pertinents afin d'affiner les informations de configurations encore appelées recommandations.

De manière générale, les étapes E2 à E12 représentent des étapes permettant de déterminer, selon un mode préféré de réalisation, le profil d'une pluralité d'interfaces de communication ou passerelles d'accès.

Les profils des passerelles d'accès sont enregistrés dans la base de données 3, étape E2. Ces profils sont créés lors de la souscription puis mis à jour de manière régulière, à chaque changement affectant l'environnement d'un abonné par exemple.

Le procédé comprend ensuite la sélection d'un abonné pour lequel il souhaite vérifier la pertinence de l'environnement, étape E3. Le procédé peut ainsi être réitéré pour chaque utilisateur/abonné ou selon le type d'abonné à cibler, qui peut être lié au profil également. On appelle cet utilisateur/abonné, utilisateur cible ou abonné cible, dans la suite de la description.

Le procédé comprend une étape E4 de sélection d'un ensemble de profils. Cette étape peut permettre de limiter l'ensemble de profils utilisés et ainsi lorsque la base de données comprend de nombreux utilisateurs, donc de nombreuses passerelles d'accès, par exemple plusieurs milliers, de réduire les temps d'exécution du procédé. Ceci peut également permettre de ne pas prendre en considération certains profils dès le départ car non pertinents.

Selon un mode de réalisation, cette sélection peut avantageusement être faite en se basant sur les données personnelles des utilisateurs associés aux passerelles d'accès.

La sélection peut par exemple prendre en compte une tranche d'âge à laquelle fait partie l'utilisateur cible et sélectionner tous les utilisateurs de cette tranche d'âge. Ainsi, un foyer composé de personnes avec de jeunes enfants peut ne pas être pris en considération dès le départ si le procédé vise plus particulièrement des recommandations ciblées sur des services ou objets liés aux personnes âgées.

Selon une autre variante, qui peut être cumulée avec une sélection par tranche d'âge, la sélection peut aussi prendre en compte la localisation géographique. Ceci s'avère être pertinent pour des services de chauffage ou de climatisation.

Selon encore une troisième variante, également cumulable, la sélection peut prendre en compte le profil familial, à savoir le nombre d'enfants par exemple.

Selon encore une quatrième variante, cette sélection peut également être avantageusement faite en se basant sur les données d'utilisation ou de fonctionnement.

Lors d'une étape E5, les profils des passerelles d'accès sélectionnées sont formatés. Pour ce faire, les profils sont vectorisés.

Chaque profil Pi est représenté sous la forme d'un vecteur tel que :

$$[\text{Math. 2}] \quad Pi = (\alpha i_1, \alpha i_2, \alpha i_3, \ldots, \alpha i_n)$$

Chaque élément du vecteur Pi correspond à un service ou un objet connecté. Chaque coefficient $\alpha_i$ représente une pondération associée au service, ou à l'objet connecté en fonction de l'utilisation faite du service ou de l'objet connecté. Plus le coefficient $\alpha_i$ est élevé, plus le service ou l'objet connecté correspondant est utilisé, ou en fonctionnement. Plus précisément, pour prendre en compte les configurations associées, chaque élément du vecteur peut être associé à une configuration d'un service ou à une configuration d'un objet connecté. Le nombre de services, d'objets connectés et de configuration pris en compte est déterminé ainsi que la longueur du vecteur correspondant.

Dans un mode de réalisation particulier, il est envisagé que le procédé ne prenne pas en considération toutes les configurations de tous les services et objets connectés disponibles mais se limitent à un nombre inférieur. Ceci peut particulièrement être le cas lorsque le fournisseur d'accès souhaite bâtir les recommandations sur certains services ou objets connectés uniquement.

Lors d'une étape E6, les profils sont regroupés en fonction des profils formatés lors de l'étape E5. Pour ce faire, selon un mode préféré de réalisation, le procédé utilise un algorithme de regroupement comme l'algorithme des k-means. Cet algorithme regroupe les passerelles d'accès dont les profils sont proches. K-means est un algorithme non supervisé de groupement (« clustering » en anglais) non hiérarchique. Il permet de regrouper en K groupes distincts les profils. Ainsi les profils similaires se retrouvent dans un même groupe. Par ailleurs, une observation ne peut se retrouver que dans un cluster à la fois (exclusivité d'appartenance). Une même observation ne peut donc appartenir à deux clusters différents.

Pour pouvoir regrouper les profils en K groupes distincts, l'algorithme K-Means a besoin d'un moyen de comparer le degré de similarité entre les différents profils. Ainsi, deux données qui se ressemblent, ont une distance de dissimilarité réduite, alors que deux objets différents ont une distance de séparation plus grande. Plusieurs notions de distance sont utilisées dans la littérature et notamment la distance Euclidienne et la distance de Manhattan.

De manière préférée, la distance utilisée est la distance Euclidienne.

La distance Euclidienne entre deux profils Pi et Pj est donc donnée par la formule :

$$[\text{Math. 3}] \quad d(Pi, Pj) = \sqrt{\sum_1^n (\alpha i_n - \alpha j_n)^2}$$

L'algorithme de K-means permet d'obtenir le nombre optimal de groupes. Pour ce faire, l'algorithme de K-Means est appliqué avec différentes valeurs de K puis la variance des différents groupes est calculée. La variance est la somme des distances entre chaque centroïd d'un groupe et les différentes valeurs inclues dans le même groupes. Ainsi, on cherche à trouver un nombre de clusters K de telle sorte que les groupes retenus minimisent la distance entre leurs centres (centroids) et les valeurs dans le même groupe. Ces méthodes d'obtention du nombre optimal de groupes sont bien connues de l'homme du métier et ne sont pas détaillées ici. Nous notons K le nombre de groupes obtenus à l'issu de l'algorithme de K-means de l'étape E6.

Le procédé comprend une étape E7 dans laquelle le profil de la passerelle d'accès cible, ou première passerelle d'accès, est comparé à chaque groupe d'interfaces de communication parmi les K groupes. Pour ce faire, le procédé comprend le calcul par exemple du centre de chaque groupe, en faisant selon un mode de réalisation préféré, une moyenne sur les coordonnées des vecteurs. Le procédé mesure la distance (par exemple Euclidienne) entre le centre obtenu pour chaque cluster et le vecteur représentatif de la passerelle cible.

Lors d'une étape E8, le procédé comprend la sélection d'un sous-ensemble L de groupes en fonction de leur distance avec la passerelle d'accès cible. Le nombre L de groupes peut être paramétré, le procédé peut par exemple décider de sélectionner 3 groupes, à savoir les 3 groupes dont la distance de profil avec le profil de la passerelle d'accès cible est la plus faible. Selon un autre mode de réalisation, le procédé peut comprendre la sélection des groupes dont la distance avec le profil de la passerelle d'accès cible est inférieure à un seuil. Selon un autre mode de réalisation, les deux approches sont combinables.

**La figure 5** illustre un mode de réalisation préféré dans lequel trois groupes sont sélectionnés. Pour chacun des groupes 1, 2 et 3, les services et les objets connectés sont listés. Les services sont numérotés 1 à n et les objets connectés sont nommés également 1 à m. Chaque ligne correspondant à une configuration d'un service ou d'un objet connecté. Chaque ligne est mentionnée dans chaque liste car la liste comprend toutes les configurations de services et objets connectées rendues possibles par le fournisseur de service. Ceci est particulièrement utile pour identifier par exemple le lancement d'un nouveau service ou d'un nouvel objet connecté. Dans ce cas, il n'est généralement pas en fonctionnement et il peut être utile de voir si un service ou objet connecté n'est pas utilisé s'il s'agit d'un service ou objet connecté nouvellement accessible. Ainsi, les listes peuvent par exemple comprendre un indicateur supplémentaire pour chaque service sur la date de lancement ou sur la durée depuis laquelle le service/l'objet connecté est en service.

Pour chacune des entrées de chacune des listes, la colonne 1 identifie le service ou objet connecté. La colonne 2 indique le nombre de passerelles d'accès de chaque groupe qui utilise le service ou l'objet connecté. La colonne 3 comprend un indicateur représentatif de la durée de fonctionnement ou fréquence d'utilisation de l'objet connecté ou du service. Le chiffre de la colonne 3 est compilé en fonction du nombre de passerelles d'accès et soit de la fréquence soit du temps d'utilisation. Plusieurs méthodes peuvent être utilisées pour obtenir cet indicateur.

Si l'indicateur est représentatif d'une durée de fonctionnement, l'indicateur peut par exemple être obtenu en calculant une moyenne de la durée de fonctionnement si l'on obtient la durée de fonctionnement de chaque utilisateur du groupe en sommant le temps et en divisant par le nombre de passerelles d'accès.

Si l'indicateur est représentatif d'une fréquence d'utilisation, l'indicateur peut de la même manière être obtenu en calculant une moyenne de la fréquence d'utilisation si l'on obtient la fréquence d'utilisation de chaque utilisateur du groupe en sommant la fréquence et en divisant par le nombre d'utilisateurs.

Sur la figure 5, on peut donc observer par exemple que trois passerelles d'accès associées à trois utilisateurs du groupe 1 utilisent le service S1 et en moyenne ils l'utilisent 5h par jour, si la colonne D représente une durée de fonctionnement en heure. De même, sept utilisateurs associés à sept passerelles d'accès du groupe 3 utilisent le service S1 et en moyenne ils l'utilisent 8h par jour.

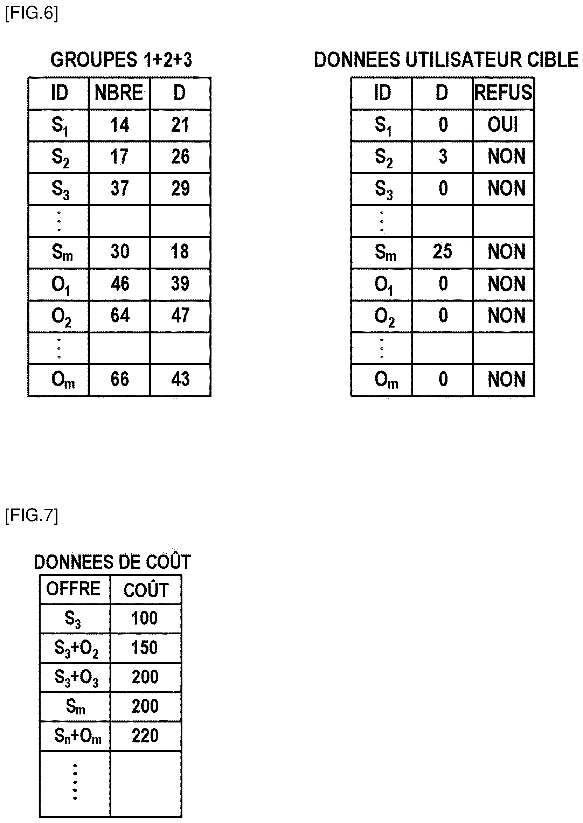

Le procédé comprend une étape E9 dans laquelle les profils des passerelles d'accès des L groupes sélectionnés lors de l'étape E8 sont analysés, listés et agrégés. Le but de cette étape est de regrouper les trois groupes précédents en une seule liste en ajoutant les données pour chaque service/objet connecté. On rappelle que ces groupes de passerelles d'accès sont sélectionnés comme étant des passerelles d'accès dont le profil est proche de celui de la passerelle d'accès cible, la proximité ayant été établie lors des étapes précédentes. Ces profils décrivent l'environnement des utilisateurs et donc les services, les objets connectés et les configurations associées à ces services et à ces objets connectés effectivement utilisés par les utilisateurs. Le procédé comprend l'établissement d'une liste globale des services, objets connectés et configurations utilisées par chacune des passerelles d'accès, ou des utilisateurs associés à ces passerelles d'accès, de ces groupes sélectionnés avec, pour chacun, le nombre de passerelles d'accès les utilisant, la durée de fonctionnement ou la fréquence d'utilisation. Comme illustré précédemment, la durée de fonctionnement ou la fréquence d'utilisation sont de manière préférée des pondérations associées à chacune des configurations de services ou objets connectés. Une telle liste est par exemple illustrée en figure 6.

**La figure 6** représente une liste, à gauche, établie à partir des listes de la figure 5 et une liste, à droite, comprenant la liste des services et objets connectés utilisés par l'utilisateur cible. La liste de gauche comprend, pour chaque ligne, donc pour chaque objet ou service référencé dans la colonne de gauche, la somme correspondante des colonnes du milieu et de droite des trois listes de la figure 5. Tous les services et objets connectés ne sont pas présents dans chaque liste. La liste de gauche comprend tous les services présents dans au moins une des groupes. La liste de droite comprend également trois colonnes. La première colonne identifie le service ou l'objet connecté comme dans les autres listes. La colonne du centre indique une durée de fonctionnement ou une fréquence d'utilisation. La colonne de droite intitulée « REFUS » donne une indication supplémentaire relative à une recommandation à la passerelle d'accès cible que le procédé aurait fait précédemment. En effet, il est parfois inutile de proposer de manière récurrente à un utilisateur un service qu'il aurait déjà refusé à une ou plusieurs reprises. Dans une variante, la liste pourrait contenir une quatrième colonne, non représentée en figure 6, indiquant le nombre de refus. En effet, si un utilisateur a refusé une fois, il peut, plusieurs mois plus tard par exemple, être finalement intéressé pour accepter la recommandation. Avantageusement, la date du refus pourrait également être rajoutée.

Au cours d'une étape E10, le procédé comprend la comparaison de cette liste avec la liste des services, objets connectés et configurations utilisées de la passerelle d'accès cible et supprime de la liste globale les services utilisés, objets connectés en fonctionnement et configurations utilisées par la passerelle d'accès cible. Cette liste globale ne contient donc plus que les services, objets connectés et configurations associées non utilisées ou en fonctionnement, à travers la passerelle d'accès cible. Ceci permet de ne pas ensuite proposer des services, objets connectés et configurations utilisés déjà utilisés.

Selon un mode de réalisation, la liste peut également exclure les objets et/ou services qui ont préalablement été refusés suite à une précédente réception d'information de configuration ou recommandation. Plus spécifiquement, seuls les objets et/ou services ayant été refusés plusieurs fois sont exclus. Plus encore, la date à laquelle ils ont été refusés peut être prise en compte pour les exclure ou non.

Au cours d'une étape E11, le procédé comprend l'évaluation pour chaque service, les objets connectés et configurations utilisées le coût induit pour la passerelle d'accès cible pour l'acquisition de l'un des services, objets connectés et configurations de la liste. Le coût peut être un coût financier, et correspondre au coût de souscription à un nouveau service, au coût d'achat ou de location d'un objet connecté ou au coût de modification d'une configuration. En général le coût de modification d'une configuration est nul ou presque nul.

Comme mentionné précédemment, il n'existe pas une relation bidirectionnelle entre services et objets connectés et ainsi, le procédé comprend l'évaluation non seulement d'un coût par service souscrit mais comprend la détermination d'un coût pour le service SA avec l'objet connecté SA dans la configuration CA mais aussi pour le service SA avec les objets connectés SA et SB dans la configuration CA. Ainsi, de nombreuses combinaisons sont possibles et dépendent de l'opérateur de service auprès duquel l'abonné a souscrit son contrat.

Lors d'une étape E12, la liste est ordonnancée du coût le plus faible au coût le plus élevé. Cette liste constitue une liste de recommandations de changement de l'environnement de l'utilisateur cible. Il est à noter que, outre les coûts financiers, la liste peut également être ordonnancée en priorisant les changements minimum de configuration. Par exemple, l'utilisateur peut disposer du service mais pas de l'objet connecté, il est parfois plus simple pour lui d'acheter ou de louer un nouvel objet connecté plutôt que de s'engager sur une longue période à souscrire un nouveau service. L'ordonnancement de la liste peut donc suivre différentes stratégies ou du moins la notion de coût peut être liée à différents coûts.

**La figure 7** représente un exemple d'une telle liste ordonnée en fonction du coût. La colonne de gauche comprend un exemple d'une liste représentative des informations de configuration. Dans cette colonne sont listés à la fois des objets connectés, des services (S3) et une combinaison d'objets connectés et de services (Sn+Om). Ensuite les informations de configuration sont classées en fonction d'un coût associé calculé. Le coût peut par exemple être un coût financier et représenter, selon la configuration, un coût de souscription, de location ou d'achat, c'est ce qui est indiqué dans la colonne de droite. Dans d'autres modes de réalisation, le coût peut être nul, en terme financier, car il peut comprendre un simple changement de configuration ou un remplacement d'un objet par un autre et dans ce cas, être avantageux financièrement par l'utilisateur. Il peut en effet se voir proposer un remplacement d'un objet connecté coûteux mais non utilisé par un objet connecté moins coûteux mais plus utile. Dans ce cas, le coût peut être représenté par exemple par le nombre d'objets à changer, par la complexité du service à mettre en place (venue d'un technicien par exemple). Le fournisseur de service peut sélectionner aussi parmi plusieurs coûts ou les combiner pour proposer une information de configuration adaptée à l'utilisateur. Celle-ci peut éventuellement être liée aux données personnelles de l'utilisateur.

Cette liste permet de générer rapidement l'information de configuration. Selon l'opérateur de services lié au serveur 2, il peut générer l'information de configuration en sélectionnant une partie de l'information présente dans la colonne de gauche de la liste représentée en figure 7. Par exemple, il peut décider de proposer les trois premières configurations les moins coûteuses.

Selon un autre mode de réalisation, il peut sélectionner les 5 ou 10, voire les n configurations dont le coût est inférieur à un seuil donné.

Par exemple, l'information de configuration est donc constituée d'un ou plusieurs services ou objets connectés ou paramétrages, directement extraits de la liste proposée en figure 7. Elle est enrichie de l'information générée à partir de l'information associée au profil de l'utilisateur. Prenons la liste de la figure 7, le service S3 est déterminé comme étant le service le plus adapté à l'utilisateur, il est proposé à l'utilisateur de la première passerelle d'accès. Ainsi, l'information de configuration comprend une information de souscription au service S3.

Si l'utilisateur de la première passerelle d'accès a souscrit à un service Sx mais la détermination de son profil démontre qu'il n'utilise pas le service Sx, alors l'information de configuration peut consister en un remplacement du service Sx par le service S3.

Ainsi, l'information de configuration est basée sur le profil associé aux secondes passerelles d'accès et sur le profil associé à la première passerelle d'accès, le profil étant principalement basé sur des informations de fonctionnement.

Dans cet exemple, un message est préparé listant ces trois configurations, voire le coût associé pour l'utilisateur, et transmettre ces informations à la première passerelle d'accès.

Lors d'une étape E13, le procédé comprend la transmission à la passerelle d'accès cible d'informations de configuration de l'environnement sous la forme d'une ou plusieurs recommandations de modification de son environnement. Ceci peut être transmis par le serveur 2 à l'interface de communication 101-k de l'utilisateur cible k. Cette information peut par exemple être affiché dans un compte client associé à l'utilisateur cible ou encore lui être transmis par d'autres modes de communication, tels des messages vocaux ou appels téléphoniques. Ceci peut également être proposé à l'utilisateur lorsqu'il sollicite de de sa propre initiative un service client associé à l'opérateur.

Les informations de configuration, déjà décrites et listées précédemment, peuvent prendre la forme d'une liste de services, objets connectés ou les deux, seuls ou en combinaison. Les informations de configuration peuvent également comprendre des informations relatives à la mise en place desdits services et objets connectés. Ceci signifie par exemple, un guide utilisateur pour favoriser la mise en fonctionnement. Les informations de configuration peuvent aussi comprendre des informations de remplacement d'un objet par un autre. Les informations de configuration peuvent comprendre des informations d'achat d'un ou plusieurs objets connectés ou de souscription à un ou plusieurs services. Les recommandations acceptées sont mises en oeuvre par l'utilisateur généralement mais peuvent aussi être implémentées automatiquement par des commandes venant du serveur 2 et transmises aux objets connectés par l'intermédiaire de la passerelle d'accès.

Lors d'une étape E14, la passerelle d'accès cible transmet des informations d'acceptation ou de refus de la recommandation au serveur 2 puis le profil de la passerelle d'accès cible est mis à jour en fonction des recommandations acceptées ou refusées. Ceci permet avantageusement selon une variante, de retirer, lors de la prochaine recommandation les suggestions refusées. Cette information de refus peut être prise en compte lors de l'étape E4. Cette étape E4 permet en effet de réduire l'ensemble de départ des profils. Les passerelles d'accès utilisant principalement des services refusés par la passerelle d'accès cible peuvent ainsi avantageusement être retirés des passerelles d'accès utilisées lors de l'étape E4. Selon une autre variante, cette information de refus peut être prise en compte lors de l'étape E10 pour non seulement éviter de proposer à l'utilisateur par l'intermédiaire de sa passerelle d'accès des services qu'il a déjà comme mentionné précédemment mais également des services qu'il aurait refusés lors d'une recommandation précédente.

Selon une autre variante, ces informations de refus peuvent être prises en compte dans l'une des étapes E12 et E13 en étant retirées lors de l'étape E12 ou en n'étant pas proposée lors de l'étape E13.

Bien entendu, mais ce n'est pas l'objet de la présente divulgation, suite à la réception des informations de configuration, l'utilisateur va pouvoir en prendre connaissance par le biais d'une interface utilisateur et accepter ou refuser également par le biais d'une interface utilisateur. Ainsi des messages de refus ou d'acceptation sont transmis au serveur. Puis une étape de configuration des services ou objets connectés permettra de modifier l'environnement de l'utilisateur.

**Revendications**

1. Procédé de transmission d'information de configuration d'un premier système comprenant au moins un premier objet connecté (COx-i) et mettant en oeuvre au moins un premier service accessibles à travers une première passerelle d'accès (101-i) permettant de connecter ledit premier système à un opérateur de services, ledit procédé étant mis en oeuvre par ledit opérateur de services et comprenant :

- la détermination d'un fonctionnement d'au moins un second objet connecté ou de la mise en oeuvre d'au moins un second service d'un second système, accessibles à travers au moins une deuxième passerelle d'accès différente de la première passerelle d'accès et permettant de connecter ledit second système audit opérateur de services,
- la transmission, par ledit opérateur de services, à ladite première passerelle d'accès (101-i) d'information de configuration dudit système accessible par ladite première passerelle d'accès (101-i), ladite information de configuration étant déterminée en fonction du fonctionnement dudit au moins second objet connecté ou de la mise en oeuvre dudit au moins second service dans ledit second système.

2. Procédé selon la revendication 1 dans lequel ladite détermination du fonctionnement d'au moins un second objet connecté prend en compte une durée de fonctionnement ou une fréquence d'utilisation dudit objet connecté.

3. Procédé selon l'une des revendications 1 ou 2 dans lequel ledit au moins un premier et second objets connectés sont associés à au moins une configuration, ladite détermination du fonctionnement prend en compte une durée de fonctionnement ou une fréquence d'utilisation de l'objet associé à au moins une desdites configurations.

4. Procédé selon l'une des revendications 1 à 3 dans lequel ledit au moins un premier et second objets connectés configurés dans l'une au moins desdites configurations sont accessibles par la souscription à au moins un desdits services, ou dans lequel au moins un service peut être souscrit par l'intermédiaire respectivement desdites première ou deuxième interfaces de communication, ladite détermination du fonctionnement prenant en compte une durée de fonctionnement ou une fréquence d'utilisation associée audits services souscrits.

5. Procédé selon l'une des revendications 1 à 4 **caractérisé en ce qu'**il comprend la détermination d'un profil associé à ladite première interface de communication et la détermination d'un profil associé à ladite au moins une seconde interface de communication, ladite détermination de chaque profil prenant en compte, pour chaque profil :

    - les objets connectés qui sont connectés à ladite interface de communication à laquelle le profil est associé,
    - la configuration desdits objets connectés,

    - les services souscrits,
    - une durée de fonctionnement ou une fréquence d'utilisation associée aux services souscrits et/ou une durée de fonctionnement ou une fréquence d'utilisation des objets connectés associée à au moins une desdites configurations.

6. Procédé selon la revendication 5 **caractérisé en ce qu'**il comprend :

    - le regroupement, en plusieurs groupes, desdits profils associés aux secondes interfaces de communication, le regroupement étant basé sur une similarité entre lesdits profils,
    - l'obtention d'une distance entre le profil associé à ladite première interface de communication et un profil représentatif dudit au moins un groupement,
    - ladite information de configuration prenant en compte le profil représentatif dudit au moins un groupement en fonction de ladite distance

7. Procédé selon la revendication 6 **caractérisé en ce qu'**il comprend, en outre, la sélection d'un ou plusieurs groupements de profils, la sélection consistant à sélectionner le ou les profils dont ladite distance avec le profil de ladite première interface de communication est la plus faible, ladite information de modification prenant en compte le profil desdites interfaces de communications d'au moins lesdits groupements sélectionnés.

8. Procédé selon la revendication 7 **caractérisé en ce qu'**il comprend en outre une classification pour les groupements de profils sélectionnés, des objets connectés en fonctionnement, des services souscrits, de la configuration utilisée pour ledit objet connecté en fonctionnement, lesdits objets connectés étant associés à un type d'objet connecté, ladite classification étant basée sur l'un ou l'autre ou plusieurs parmi :

    - le nombre d'interfaces de communication connectées chacune à un desdits types d'objets connectés ou le nombre d'interfaces de communication pour lesquelles un au moins desdits services est souscrit,
    - la durée de fonctionnement ou la fréquence d'utilisation dudit service ou dudit type d'objet connecté dans une desdites configurations,

    ladite classification ne comprenant pas lesdits types d'objets connectés utilisés dans les configurations en fonctionnement accessibles par ladite première interface de communication, ni lesdits services souscrits accessibles par ladite première interface de communication.

**9.** Procédé selon la revendication 8 **caractérisé en ce qu'**il comprend pour au moins un nombre déterminé de services souscrits, et/ou de types d'objets connectés présents dans ladite classification, la détermination d'un coût associé à la mise en oeuvre desdits services ou desdits types d'objets connecté dans lesdites configurations.

**10.** Procédé selon la revendication 9 **caractérisé en ce que** ladite information de configuration comprend une liste de services, et/ou de types d'objets connectés et de configurations associées sélectionnés en fonction dudit coût déterminé.

**11.** Dispositif (2) de transmission d'information de configuration d'un premier système comprenant au moins un premier objet connecté (Cox-i) et mettant en oeuvre au moins un premier service accessible à travers une première passerelle d'accès (101-i) permettant de connecter ledit premier système audit dispositif, ledit dispositif comprenant un ou plusieurs processeurs configurés pour :

 - déterminer un fonctionnement d'au moins un autre objet connecté ou la mise en oeuvre d'au moins un second service accessibles à travers au moins une deuxième passerelle d'accès différente de la première passerelle d'accès et permettant de connecter ledit second système audit dispositif,
 - transmettre, à ladite première passerelle d'accès (101-i), une information de configuration dudit premier système accessible par ladite première passerelle d'accès (101-i), ladite information de configuration étant déterminée en fonction dudit fonctionnement dudit au moins second objet connecté ou de la mise en oeuvre dudit au moins second service dans ledit second système..

**12.** Programme d'ordinateur comprenant des instructions pour l'exécution des étapes du procédé selon l'une des revendications 1 à 10 lorsque ledit programme est exécuté par un ordinateur.

**13.** Support d'enregistrement lisible par un ordinateur sur lequel est enregistré un programme d'ordinateur comprenant des instructions pour l'exécution des étapes du procédé selon l'une des revendications 1 à 10.

**14.** Passerelle d'accès permettant de connecter un premier système à un opérateur de services, le premier système comprenant au moins un premier objet connecté (COx-i) et mettant en oeuvre au moins un premier service, ledit opérateur de services étant connecté à au moins un second système à travers une seconde passerelle d'accès, ledit second système comprenant au moins un second objet connecté et mettant en oeuvre au moins un second service, ladite passerelle d'accès étant configurée pour recevoir, dudit opérateur de services, au moins une information de configuration dudit premier système, ladite information de configuration étant déterminée en fonction du fonctionnement dudit au moins second objet connecté ou de la mise en oeuvre dudit au moins second service dans ledit second système.

**15.** Objet connecté dans un système comprenant un ou plusieurs objets connectés, une passerelle d'accès et mettant en oeuvre au moins un premier service, ledit système étant connecté à un opérateur de services à travers ladite première passerelle d'accès, ledit opérateur de services étant connecté à au moins un second système à travers une seconde passerelle d'accès, ledit second système comprenant au moins un second objet connecté et mettant en oeuvre au moins un second service, ledit objet connecté est configuré pour recevoir, dudit opérateur de services, à travers ladite première passerelle d'accès, au moins une information de configuration, ladite information de configuration étant déterminée en fonction du fonctionnement dudit au moins second objet connecté ou de la mise en oeuvre dudit au moins second service dans ledit second système.

[Fig. 1]

[Fig. 2]

[Fig. 3]

[Fig. 5]

GROUPE 1

| ID | NBRE | D |
|---|---|---|
| $S_1$ | 3 | 5 |
| $S_2$ | 4 | 7 |
| $S_3$ | 10 | 5 |
| ⋮ | | |
| $S_m$ | 8 | 4 |
| $O_1$ | 12 | 10 |
| $O_2$ | 19 | 16 |
| ⋮ | | |
| $O_m$ | 23 | 18 |

GROUPE 2

| ID | NBRE | D |
|---|---|---|
| $S_1$ | 4 | 8 |
| $S_2$ | 5 | 9 |
| $S_3$ | 15 | 6 |
| ⋮ | | |
| $S_m$ | 9 | 8 |
| $O_1$ | 18 | 9 |
| $O_2$ | 25 | 10 |
| ⋮ | | |
| $O_m$ | 24 | 12 |

GROUPE 3

| ID | NBRE | D |
|---|---|---|
| $S_1$ | 7 | 8 |
| $S_2$ | 8 | 10 |
| $S_3$ | 12 | 8 |
| ⋮ | | |
| $S_m$ | 13 | 6 |
| $O_1$ | 16 | 20 |
| $O_2$ | 20 | 21 |
| ⋮ | | |
| $O_m$ | 19 | 13 |

[FIG. 4]

| | |
|---|---|
| Détermination de profils utilisateurs | E1 |
| Enregistrement des profils dans la base de données | E2 |
| Sélection d'un utilisateur | E3 |
| Sélection d'un ensemble de profils utilisateurs | E4 |
| Vectorisation des profils | E5 |
| Regroupement des profils sélectionnés | E6 |
| Calcul d'une distance entre profils | E7 |
| Sélection d'un ou plusieurs groupes | E8 |
| Analyse des services, des objets connectés, des configurations | E9 |
| Comparaison avec le profil de l'utilisateur sélectionné | E10 |
| Evaluation des coûts de changement | E11 |
| Classification | E12 |
| Transmission des recommandations | E13 |
| Prise en compte de l'avis de l'utilisateur | E14 |

[FIG.6]

GROUPES 1+2+3

| ID | NBRE | D |
|----|------|---|
| $S_1$ | 14 | 21 |
| $S_2$ | 17 | 26 |
| $S_3$ | 37 | 29 |
| $\vdots$ | | |
| $S_m$ | 30 | 18 |
| $O_1$ | 46 | 39 |
| $O_2$ | 64 | 47 |
| $\vdots$ | | |
| $O_m$ | 66 | 43 |

DONNEES UTILISATEUR CIBLE

| ID | D | REFUS |
|----|---|-------|
| $S_1$ | 0 | OUI |
| $S_2$ | 3 | NON |
| $S_3$ | 0 | NON |
| $\vdots$ | | |
| $S_m$ | 25 | NON |
| $O_1$ | 0 | NON |
| $O_2$ | 0 | NON |
| $\vdots$ | | |
| $O_m$ | 0 | NON |

[FIG.7]

DONNEES DE COÛT

| OFFRE | COÛT |
|-------|------|
| $S_3$ | 100 |
| $S_3 + O_2$ | 150 |
| $S_3 + O_3$ | 200 |
| $S_m$ | 200 |
| $S_n + O_m$ | 220 |
| $\vdots$ | |

Europäisches
Patentamt

European
Patent Office

Office européen
des brevets

# RAPPORT DE RECHERCHE EUROPEENNE

Numéro de la demande

EP 23 16 1528

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2020/120977 A2 (PENTAIR PLC [GB]) 18 juin 2020 (2020-06-18) <br> * alinéa [0041] – alinéa [0042] * <br> * alinéa [0046] * <br> * alinéa [0054] – alinéa [0055] * <br> * alinéa [0059] * <br> * alinéa [0061] * <br> * alinéa [0063] * <br> ----- | 1-15 | INV. <br> H04L12/28 <br> H04L67/12 |
| X | EP 3 043 585 A1 (VERISIGN INC [US]) 13 juillet 2016 (2016-07-13) <br> * alinéa [0063] * <br> * alinéa [0037] – alinéa [0044] * <br> * alinéa [0047] – alinéa [0048] * <br> * alinéa [0052] – alinéa [0055] * <br> * alinéa [0066] – alinéa [0074] * <br> * alinéa [0002] – alinéa [0015] * <br> * figure 3 * <br> ----- | 1-15 | |
| X | US 2016/134932 A1 (KARP IGOR [US] ET AL) 12 mai 2016 (2016-05-12) <br> * alinéa [0208] – alinéa [0230] * <br> * alinéa [0363] – alinéa [0369] * <br> * alinéa [0430] – alinéa [0431] * <br> * alinéa [0437] * <br> * alinéa [0453] – alinéa [0457] * <br> * alinéa [0459] – alinéa [0463] * <br> * alinéa [0474] * <br> ----- | 1-15 | DOMAINES TECHNIQUES RECHERCHES (IPC) <br><br> H04L |

Le présent rapport a été établi pour toutes les revendications

| Lieu de la recherche | Date d'achèvement de la recherche | Examinateur |
|---|---|---|
| Munich | 20 juillet 2023 | Martinozzi, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

EP 4 254 879 A1

## ANNEXE AU RAPPORT DE RECHERCHE EUROPEENNE
## RELATIF A LA DEMANDE DE BREVET EUROPEEN NO.

EP 23 16 1528

20-07-2023

| Document brevet cité au rapport de recherche | | Date de publication | Membre(s) de la famille de brevet(s) | | Date de publication |
|---|---|---|---|---|---|
| WO 2020120977 | A2 | 18-06-2020 | US 2021298557 | A1 | 30-09-2021 |
| | | | WO 2020120977 | A2 | 18-06-2020 |
| EP 3043585 | A1 | 13-07-2016 | EP 3043585 | A1 | 13-07-2016 |
| | | | US 2016205106 | A1 | 14-07-2016 |
| US 2016134932 | A1 | 12-05-2016 | US 2016134932 | A1 | 12-05-2016 |
| | | | US 2016142758 | A1 | 19-05-2016 |
| | | | US 2017118499 | A1 | 27-04-2017 |
| | | | US 2018227620 | A1 | 09-08-2018 |
| | | | US 2019208250 | A1 | 04-07-2019 |

EPO FORM P0460